# NEW EUROPEAN PATENT SPECIFICATION

(11) **EP 1 937 511 B2**
(45) Date of publication and mention of the opposition decision: **23.10.2013**
(45) Mention of the grant of the patent: 26.08.2009
(21) Application number: 07747502.8
(22) Date of filing: 11.06.2007
(51) Int. Cl.: B60P 7/13, B65D 90/00

(54) **LOCKING DEVICE**
SPERRVORRICHTUNG
DISPOSITIF DE VERROUILLAGE

(30) Priority: 09.06.2006 NL 1031973
(43) Date of publication of application: 02.07.2008
(73) Proprietor: Container Quick Lock Luxembourg S.A., Luxembourg (LU)
(72) Inventor: STRIEN, Cornelis Gerardus, NL-3415 PS Polsbroek (NL); VAN BRITSOM, Rony, 2980 Sint Antonius Zoersel (BE)
(74) Representative: Hatzmann, Martin
(86) International application number: PCT/NL2007/050279
(87) International publication number: WO 2007/142531

(56) References cited:
- EP-A- 0 507 010
- EP-A2- 1 800 946
- WO-A1-01//76980
- WO-A1-2004//045904
- GB-A- 1 260 364
- US-A1- 5 020 947
- US-A1- 5 613 814

## Description

The invention relates to a locking device for locking an ISO-standardized corner fitting of a freight container.

EP 0 507 010 discloses a device for fastening containers comprising
- locking means which are adjustable between an opened position in which the locking means can freely pass an opening of the corner fitting and a closed position in which the locking means hook behind the opening of a wall surrounding the opening of the corner fitting;
- operating means which, upon placement of a container on the locking device, through cooperation with a wall of the corner fitting, are adjustable from an unloaded initial position to an end position loaded by the weight of the container, and
- an adjusting mechanism which couples the locking means and the operating means in a manner such that the initial position of the operating means corresponds to the opened position of the locking means and that the end position of the operating means corresponds to the closed position of the locking means, and that, when a corner fitting of a container is placed on the locking device, the weight load of the container energizes the locking means towards the closed position.

In practice, the most common locking device is known to the skilled person under the name "twist lock" and forms a simple and reliable locking means for fixing freight containers provided with ISO standardized corner fittings on a vehicle, for instance a container chassis.

A drawback of the "twist lock" is that the lock must be adjusted by hand, which may be a relatively hard and time-consuming job. In particular when a vehicle has just been loaded, the time consuming fastening can jeopardize the efficiency. With a container chassis that has just been loaded by a container crane for instance, the fastening can cause the loading place to be occupied too long.

In practice, for vehicles that very frequently take up and deliver containers, such as stackers and straddle carriers, locking devices are realized whose locking means are externally energized. For vehicles that change containers less frequently, such as container chassis, such an externally energized locking device is too expensive and/or too difficult to power.

The object of the invention is an inexpensive locking device with which these drawbacks can be obviated. To that end, the invention provides a locking device for locking an ISO-standardized corner fitting of a freight container, comprising the features of claim 1.

By providing such a locking device that can be energized to the closed position under the weight load of the container, it is possible, when a container is placed, that the locking means are adjusted under the weight load of the container. As adjustment to the closed position in such a manner takes place automatically, much time can be gained.

Preferably, the operating means are connected via a transmission mechanism to the locking means, while the operating means and the locking means are designed separately from each other. The transmission mechanism can then be designed as the adjusting mechanism that couples the locking means and the operating means.

What can be achieved through the provision of securing means that secure the locking means in the second position, is that, upon placement of the container, after operation of the locking means, the locking device can be secured for transport. Thus, the container is secured against lateral movement relative to the locking device, against upward movement relative to the locking device, and against rotation relative to the locking device. The securing means are adjustable between a securing position in which the movement of the locking means from the closed position to the opened position is blocked, and a releasing position, in which the movement of the locking means is free. The securing means can cooperate directly with the locking means for blocking movement thereof, but the securing means can also block movement of the locking means via, for instance, cooperation with the operating means.

In an advantageous embodiment, the securing means are designed separately from the locking means and the operating means. In the securing position, the securing means block the movement of the locking means and in the releasing position, the securing means release the movement of the locking means. The securing means can be coupled to the operating means for blocking the movement of the locking means or can be directly coupled to the locking means for preventing movement thereof in the closed position.

Preferably, upon placement of a container on the locking device, the operating means are adjustable through cooperation with a wall of the corner fitting between the unloaded initial position and the end position loaded by the weight of the container. In such an embodiment, also, readjusting the locking means can be performed automatically during lifting of the locking device from the container.

Here, preferably, biasing means are provided which bias the locking means to the opened position so that, upon placement of a corner fitting of the container on the locking device, the weight load of the container energizes the locking means against the action of the bias towards the closed position and, upon removal of a container from the locking means, the biasing means bias the locking means towards the opened position. Through biasing the locking means with the aid of such biasing means towards the opened position, the reliability of the locking device can be enhanced.

In an elegant manner, the biasing means comprise an accumulator for storing a part of the energy which is supplied by the container during placement on the operating means through overcoming the bias, and for delivering the energy to the operating mechanism through relaxation of the bias during removal of the container. Such an accumulator is preferably designed as a spring, but can naturally also be designed as a different deforming element, or as, for instance, a hydraulic or pneumatic accumulator.

In an advantageous manner, the locking device is provided with compensating means for compensating a variation in thickness of a wall of the corner fitting of the container which cooperates with the operating means. As a result, clearance between the locking device and the corner fitting of the container is reduced. The compensating means can for instance be designed as resilient lips located between the housing and the locking means, or located between the housing and the operating means. The compensating means can also be designed as, for instance, a resilient deforming element, a spring or a resilient cushion.

The invention also relates to a vehicle provided with one or more locking devices.

Further advantageous embodiments of the invention are represented in the subclaims.

When, in this context, an ISO standardized corner fitting is mentioned, this is understood to mean a corner fitting as defined in the standard ISO 1161: "series 1 freight containers - corner fittings - specification" publication date 06-09-1990, as published by the International Standardization Organisation of Geneva, Switzerland.

The invention will be further elucidated on the basis of exemplary embodiments which are represented in a drawing.

In the drawing:
Fig. 1 shows a schematic side view of a first embodiment of a locking device according to the invention with the locking means in the opened position and the operating means in the initial position;
Fig. 2 shows a schematic side view of the locking device of Fig. 1 with the locking means in the closed position and the operating means in the end position;
Fig. 3 shows a perspective view corresponding to Fig. 1 of a second embodiment of a locking device according to the invention;
Fig. 4 shows a schematic, perspective view of a schematic perspective view corresponding to Fig. 2 of the second embodiment shown in Fig. 3;
Fig. 5 shows a schematic, partially cross-sectioned side view of a schematic view corresponding to Fig. 1 of a third embodiment of a locking device according to the invention;
Fig. 6 shows a schematic, partially cross-sectioned side view of a schematic view corresponding to Fig. 2 of the third embodiment shown in Fig. 5;
Fig. 7 shows a schematic, perspective view of a view corresponding to Fig. 1 of the third embodiment shown in Fig. 5; and
Fig. 8 shows a schematic, perspective view of a view corresponding to Fig. 2 of the third embodiment shown in Fig. 5.

- The Figures are merely schematic representations of preferred embodiments of locking devices according to the invention and are given by way of non-limitative exemplary embodiments.

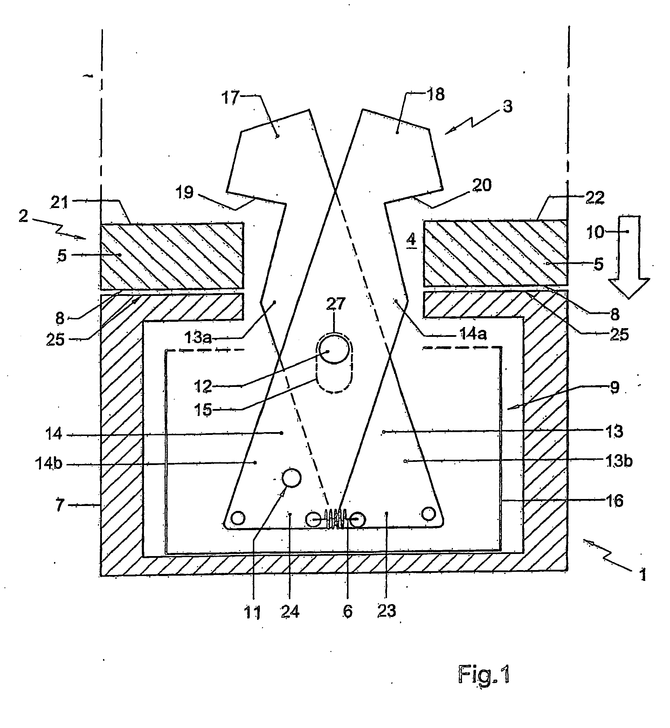

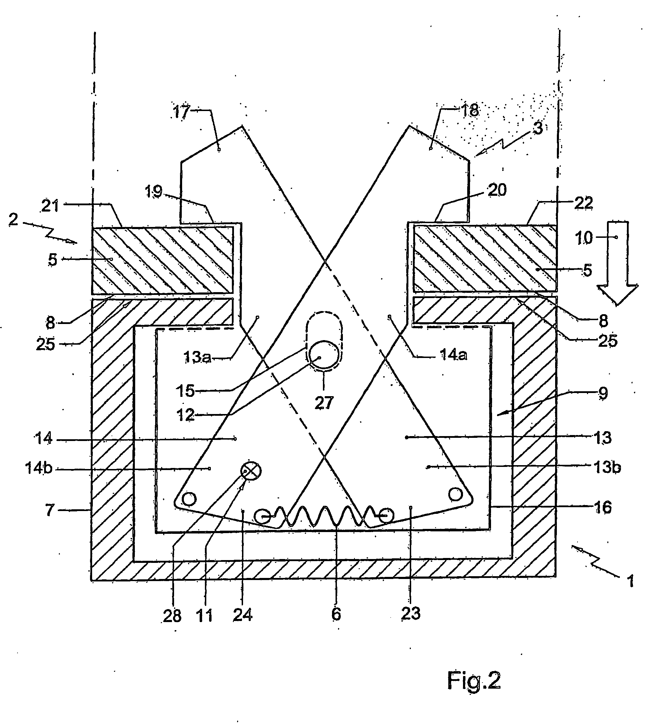

In the Figures, identical or corresponding parts are indicated with the same reference numerals. With reference to Figs. 1 and 2, a locking device 1 is shown therein for locking an ISO standardized corner fitting 2 of a freight container.

The locking device 1 comprises locking means 3 which are adjustable between an opened position represented in Fig. 1 and a closed position represented in Fig. 2. In the opened position, the locking means can freely pass an opening 4 of the corner fitting 2. In the closed position, the locking means 3 hook behind a wall of the corner fitting 2 surrounding the opening 4.

The locking device 1 comprises biasing means 6 which bias the locking means 3 towards the opened position. The locking device 1 further comprises operating means 7 which, upon placement of a container on the locking device 1, and upon removal of a container from the locking device 1, cooperate with an outside surface 8 of the wall 5 of a corner fitting 2. Owing to this cooperation, the operating means 7 are adjustable between an unloaded initial position shown in Fig. 1, and an end position loaded by the weight of the container shown in Fig. 2. The locking device 1 further comprises an adjusting mechanism 9 which couples the locking means 3 and the operating means 7. Here, the coupling is such that the initial position of the operating means 7 corresponds to the opened position of the locking means 3, and that the end position of the operating means 7 corresponds to the closed position of the locking means 3.

Referring to Figs. 1 and 2, it is shown that, upon placement of a corner fitting 2 of a container on the locking device 1, the weight load of the container, indicated with arrow 10, energizes the locking means 3 against the action of the bias towards the closed position. When placing the corner fitting 2, the opposing biasing means 6 store energy, with which, upon removal of the container, the locking means 3 can be brought to the opened position.

The locking device 1 is further provided with securing means 11 for securing the locking means 3 in the closed position.

Figs. 1 and 2 show that the adjusting mechanism 9 comprises a scissor mechanism. The scissor mechanism comprises two legs 13, 14 crossing at the location of a pivot 12.

The pivot 11 is slideably received in slotted holes 15 recessed in the inner box 16 of the adjusting mechanism 9.

The locking means 3 are formed by free ends 17, 18 of the legs 13, 14 of the scissor mechanism.

Here, at the respective free ends 17, 18, of the legs 13, 14, the locking means 3 comprise clamping surfaces 19, 20 provided substantially at right angles to each other on the scissor mechanism. The clamping surfaces 19 cooperate with an inside surface 21 of the opening 4 in the wall 5 of the corner fitting 2, while the clamping surfaces 20 cooperate with an inside surface 22 of the wall 5 which surrounds the opening 4 of the corner fitting 2, respectively.

The leg parts 13a, 14a of the scissors extending between the pivot 12 and the clamping surfaces 19, 20 provided with free ends 17, 18, are longer than the legs parts 13b, 14b extending between the pivot 12 and the opposite free ends 23, 24. As a result, when removing the container from the locking device 1 or placing the container on the locking device 1, the scissor legs 13, 14 will close and open quicker, respectively, than the upward or downward movement of the container. Therefore, the container experiences hardly any resistance and can be taken from the locking device 1 in an even manner. This further enhances the safety and reduces the risk of the container getting caught when it is placed or removed.

The operating means 7, designed here as a box-shaped outer housing, are provided with a first contact surface 25 for cooperation with an outside surface 8 of the wall 5 of the corner fitting 2. The operating means are further provided with a second contact surface 27 which engages the pivot 12 of the scissor mechanism.

The securing means 11 comprise a pin 28 which is adjustable between a securing position shown in Fig. 2, in which the pin 28 blocks movement of the legs 13, 14 of the scissor mechanism, and a releasing position (not shown) in which the pin 28 releases movement of the legs 13, 14.

The pin 28 is towards the securing position under the action of a spring 29. What can be achieved as a result of this is that the securing mechanism automatically locks the locking device 1 as soon as the locking means 3 are in the closed position. The locking can then for instance be released by withdrawing the pin 28 against the action of the spring 29 and having it return after the container is released from the locking device 1.

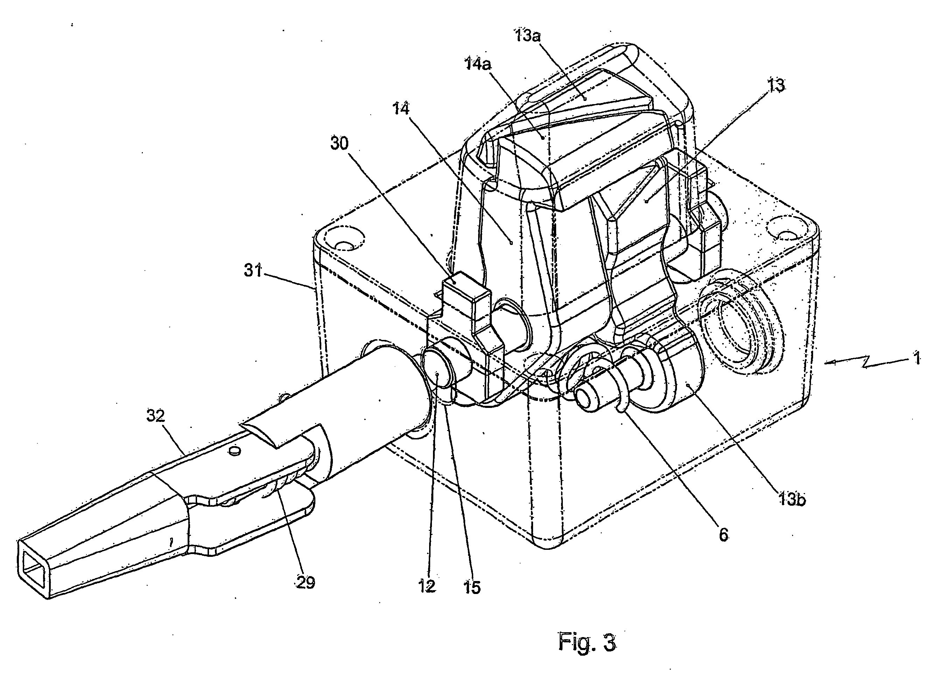

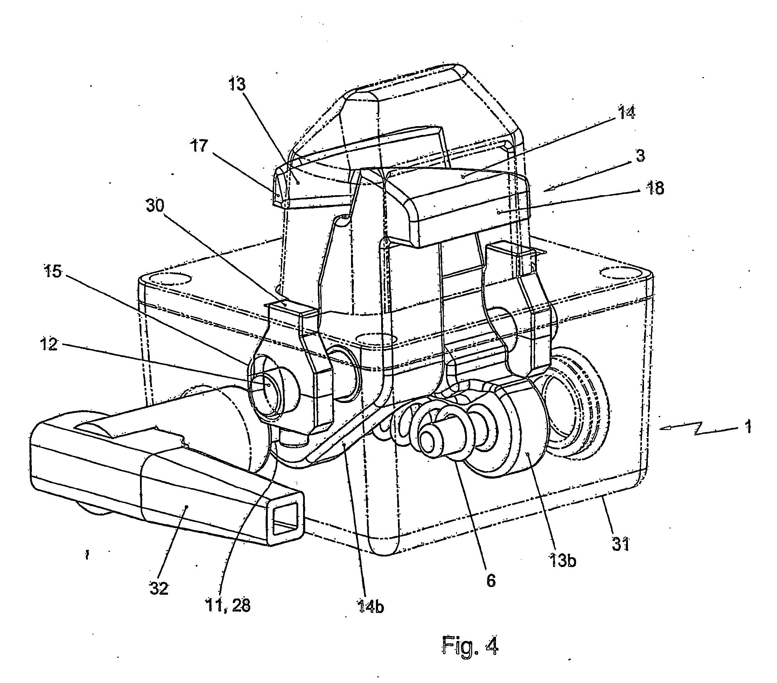

In Figs. 3 and 4, a second embodiment of the locking device 1 is shown. In Figs. 3 and 4, the operating means are designed as operating projections 30. Here, the housing 31 has the function of inside box 16 of the adjusting mechanism 9 of Figs. 1 and 2. Both the housing 31 and the operating projections 30 are provided with slotted holes 15 in which the pivot 12 is received so as to be slideable. Pin 28 locks the short leg parts 13b, 14b in the securing position. Pin 28 is under the action of spring 29 if clamp 32 is in folded-in condition, as shown in Fig. 4. By folding the clamp 32 open to a folded-open condition in which it is in the same direction as the axis 28, the spring action of the spring 29 is removed, the securing means 11 are then in the releasing position. As a result, the securing is removed, as shown in Fig. 3.

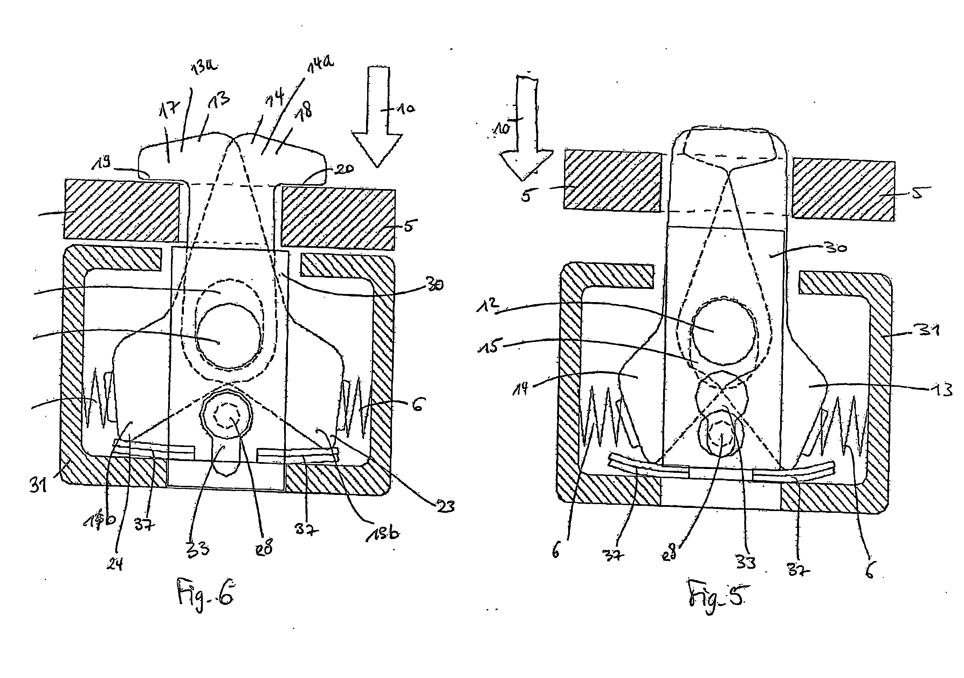

In Figs. 5, 6, 7 and 8, a third embodiment of the locking device 1 is represented. The operating means 7 are formed by the operating projections 30. In this exemplary embodiment, the adjusting mechanism 9 comprises the pivot 12 which is received in a slotted hole 15 of the operating projections 30 and in a matching hole in the scissor legs 13, 14. The pivot 12 is received so as to be slideable in the slotted hole 15. From the opened position, shown in Fig. 5, the operating projections 30 are pressed down by the weight of the container in a direction according to the arrow 10, and the pivot 12 also moves downwards in the slotted holes 15. The scissor legs 13 and 14 are pressed against the force of the biasing means 6 to the closed position shown in Fig. 6, so that the free ends 17, 18 hook behind a wall 5 of a corner fitting of the container.

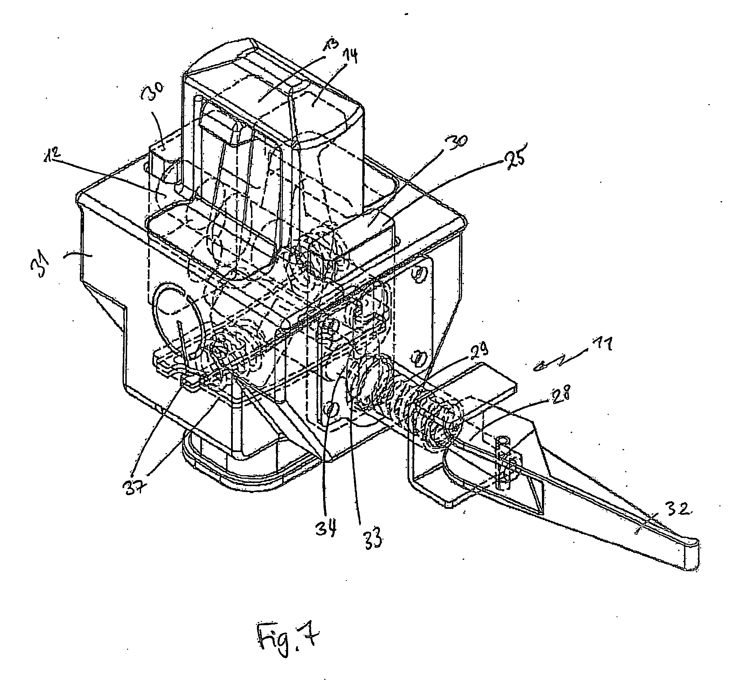

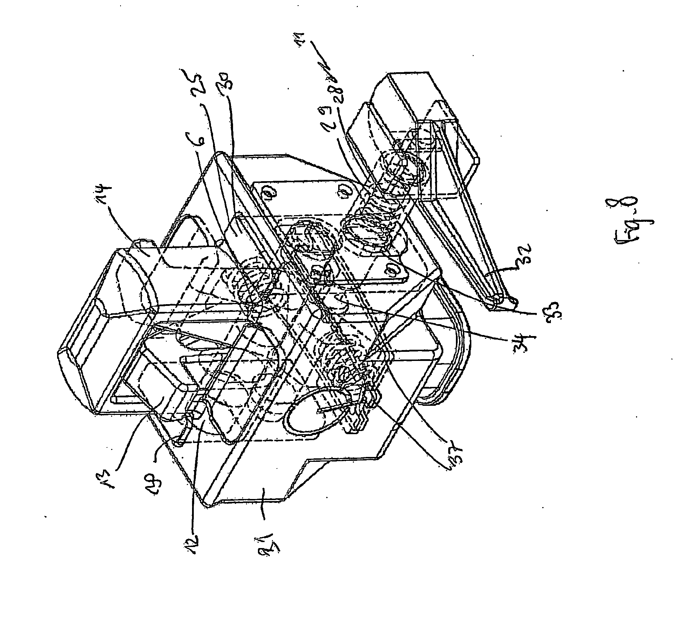

In the closed position, the locking device 1 is secured in vertical direction by the securing means 11. In this exemplary embodiment, the securing means 11 comprise the pin 28 with spring 29 and clamp 32, and a key hole 33. The securing means 11 are adjustable between a securing position, shown in Fig. 8, and a releasing position, shown in Fig. 7.

In the securing position, the movement of the operating projections 30 relative to the housing 31 is prevented. Thus, movement of the scissor legs 13, 14 is blocked and the operating device 1 is secured, both in lateral direction relative to the locking device 1 and upward direction relative to the locking device 1, and against rotation of the container relative to the operating device 1.

By folding the clamp 32 open to a folded-open position in which it extends in the same direction as the pin 28, the tension in spring 29 is reduced, as shown in Fig. 7. As a result, the pin 28 can slide from the housing until a narrower part 34 of the pin drops into the narrow part of the key hole 33, as shown in Fig. 5. The operating projections 30 can then move upwards under their spring action, while the scissor legs 13, 14 move to the opened position as a result of the biasing means 6.

In order to secure the locking device 1 in the closed position shown in Fig. 7, the clamp 32 is folded in, as shown in Fig. 8. In the closed position, the operating projections 30 are pressed down and the narrower part 34 of the pin 28 has come loose from the narrow part of the key hole 33, and the pin is axially displaced under the spring action. Movement of the operating projections 30 relative to the housing 31 is thus prevented and the locking device 1 is secured.

In the securing position, as shown in Fig. 8, the locking means 3 are prevented from moving freely from the closed position, in which they hook behind the opening of the wall 5 surrounding the corner fitting 2, towards the opened position, in which they can freely pass the opening of the corner fitting 5, by means of blocking the movement of the operating means 7. In order to take a container from the locking device 1, the securing means 11 are put into the releasing position, as shown in Fig. 7, by folding out the clamp 32.

The pin 28 can be provided at the end opposite the clamp with a groove for cooperation with a projection of the housing 31. As a result, in the securing position, the pin 28 is connected to the housing 31 so as to be secured against rotation.

In this embodiment, the locking device 1 is also provided with compensating means 37, designed here as resilient lips. In an advantageous embodiment, the resilient lips can be designed as leaf springs. Here, the compensating means 37 are located between the free ends 23, 24 of the scissor legs 13, 14, and the housing 31. The compensating means 39 compensate for a variation in thickness of the wall 5 of the corner fitting 2 of the container, so that clearance between the clamping surfaces 19, 20 of the scissor legs 13, 14 and the wall 5 of the corner fitting 2 of the container is prevented.

It will be clear to the skilled person that the invention is not limited to the exemplary embodiment represented here. Many variants are possible

It is further noted that it is also possible to perform the readjustment of the locking device by hand, or to have readjustment take place under the influence of, for instance, compressed air which is released when the spring system of a container chassis is emptied prior to unloading.

Such variants will be clear to the skilled person and are understood to fall within the scope of the invention as set forth in the following claims.

## Claims

1. A locking device (1) for locking an ISO-standardized corner fitting (2) of a freight container, comprising:
- locking means (3) which are adjustable between an opened position in which the locking means (3) can freely pass an opening (4) of the corner fitting (2), and a closed position in which the locking means (3) hook behind the opening of a wall (5) surrounding the opening (4) of the corner fitting (2);
- operating means (7) which, upon placement of a container on the locking device (1), are adjustable through cooperation with a wall (5) of the corner fitting (2) from an unloaded initial position to an end position loaded by the weight of the container, and
- an adjusting mechanism (9) which couples the locking means (3) and the operating means (7) in a manner such that the initial position of the operating means (7) corresponds to the opened position of the locking means (3) and that the end position of the operating means (7) corresponds to the closed position of the locking means (3), and that, upon placement of a corner fitting (2) of a container on the locking device (1), the weight load of the container energizes the locking means (3) towards the closed position, **characterized in that** further, securing means (11) are provided for securing the locking means (3) in the closed position, and **in that** the adjusting mechanism (9) comprises a scissor mechanism.

2. A locking device (1) according to claim 1, wherein, upon placement of a container on the locking device (1), the operating means (7) are adjustable, through cooperation with a wall (5) of the corner fitting (2), between an unloaded initial position and the end position loaded by the weight of the container.

3. A locking device (1) according to claim 2, further comprising:
- biasing means (6) which bias the locking means (3) towards the opened position, so that upon placement of a corner fitting (2) of a container on the locking device (1), the weight load of the container energizes the locking means (3) against the action of the bias towards the closed position, and, upon removal of the container from the locking device, the biasing means (6) bias the locking means (3) towards the opened position.

4. A locking device (1) according to claim 3, wherein the biasing means (6) comprise an accumulator for storing a part of the energy supplied by the container during placement to the operating means (7), and delivering the energy again via the biasing force to the operating means (7) during removal of the container.

5. A locking device (1) according to claim 4, wherein the scissor mechanism comprises two legs (13, 14) crossing at the location of a pivot (12).

6. A locking device (1) according to claim 5, wherein the pivot (12) is slidably mounted.

7. A locking device (1) according to any one of the preceding claims 5 - 6, wherein the locking means (3) are formed by free ends (17, 18) of the legs (13, 14) of the scissors.

8. A locking device (1) according to claim 7, wherein the locking means (3), on the free ends (17, 18) of the legs (13, 14) of the scissors, per end, form two clamping surfaces (19, 20) substantially at right angles to each other, for cooperation with an inside surface (21) of an opening (4) in the wall (5) of the corner fitting (2), and an inside surface (22) of the wall (5) surrounding the opening (4) of the corner fitting (2), respectively.

9. A locking device (1) according to any one of claims 5 - 9, wherein the leg parts (13a, 14a) of the scissors extending between the pivot (12) and free ends (17, 18) provided with the clamping surfaces (19, 20) are longer than the leg parts (13b, 14b) extending between the pivot (12) and the opposite free ends (23, 24).

10. A locking device (1) according to any one of the preceding claims 8 - 9, wherein the operating means (7) are provided with a first contact surface (25) for cooperation with an outside surface (8) of the wall (5) of the corner fitting (2), and with a second contact surface (27) which engages the pivot of the scissor mechanism.

11. A locking device (1) according to any one of the preceding claims 5 - 10, wherein the securing means (11) comprise a pin (28) which is adjustable between a securing position in which the pin (28) blocks movement of the legs (13, 14) of the scissors and a releasing position in which the pin (28) releases movement of the legs (13, 14) of the scissors.

12. A locking device (1) according to claim 11, wherein the pin (28) is under spring action towards the securing position.

13. A locking device (1) according to claim 12, wherein the spring action can be removed with the aid of a clamp (32) provided with an indicator.

14. A vehicle, in particular container chassis, provided with a number of locking devices (1) according to any one of the preceding claims.

## Patentansprüche

1. Verriegelungsvorrichtung (1) zur Verriegelung eines nach ISO standardisierten Eckbeschlags (2) eines Frachtcontainers, umfassend:
- Verriegelungsmittel (3), welche zwischen einer geöffneten Stellung, in welcher die Verriegelungsmittel (3) unbehindert eine Öffnung (4) des Eckbeschlags (2) passieren können, und einer geschlossenen Stellung, in welcher sich die Verriegelungsmittel (3) hinter der Öffnung einer Wand (5), welche die Öffnung (4) des Eckbeschlags (2) umgibt, verhaken, einstellbar sind;
- Betriebsmittel (7), welche bei einer Platzierung eines Containers auf der Verriegelungsvorrichtung (1) durch ein Zusammenwirken mit einer Wand (5) des Eckbeschlags (2) von einer unbelasteten anfänglichen Stellung in eine Endstellung, welche durch das Gewicht des Containers belastet ist, einstellbar sind, und
- einen Einstellmechanismus (9), welcher die Verriegelungsmittel (3) und die Betriebsmittel (7) in einer Weise koppelt, so dass die anfängliche Stellung der Betriebsmittel (7) mit der geöffneten Stellung der Verriegelungsmittel (3) korrespondiert und so dass die Endstellung der Betriebsmittel (7) mit der geschlossenen Stellung der Verriegelungsmittel (3) korrespondiert, und so dass bei einer Platzierung eines Eckbeschlags (2) eines Containers auf der Verriegelungsvorrichtung (1) die Gewichtslast des Containers die Verriegelungsmittel (3) zu der geschlossenen Stellung treibt, **dadurch gekennzeichnet, dass** darüber hinaus Sicherungsmittel (11) vorhanden sind, um die Verriegelungsmittel (3) in der geschlossenen Stellung zu halten, und dass der Einstellmechanismus (9) einen Scherenmechanismus umfasst.

2. Verriegelungsvorrichtung (1) nach Anspruch 1, **dadurch gekennzeichnet, dass** bei einer Platzierung eines Containers auf der Verriegelungsvorrichtung (1) die Betriebsmittel (7) durch ein Zusammenwirken mit einer Wand (5) des Eckbeschlags (2) zwischen einer unbelasteten anfänglichen Stellung und der Endstellung, welche durch das Gewicht des Containers belastet ist, einstellbar sind.

3. Verriegelungsvorrichtung nach Anspruch 2, darüber hinaus umfassend:
- Vorspannmittel (6), welche die Verriegelungsmittel (3) zu der geöffneten Stellung vorspannen, so dass bei einer Platzierung eines Eckbeschlags (2) eines Containers auf der Verriegelungsvorrichtung (1) die Gewichtslast des Containers die Verriegelungsmittel (3) gegen die Wirkung der Vorspannung zu der geschlossenen Stellung treibt, und so dass bei einem Entfernen des Containers von der Verriegelungsvorrichtung die Vorspannmittel (6) die Verriegelungsmittel (3) zu der geöffneten Stellung vorspannen.

4. Verriegelungsvorrichtung (1) nach Anspruch 3, **dadurch gekennzeichnet, dass** die Vorspannmittel (6) einen Akkumulator umfassen, um einen Teil der Energie, welche während der Platzierung durch den Container den Betriebsmitteln (7) bereitgestellt wird, zu speichern, und um die Energie mittels der Vorspannkraft wieder während eines Entfernens des Containers den Betriebsmitteln (7) zuzuführen.

5. Verriegelungsvorrichtung (1) nach Anspruch 4, **dadurch gekennzeichnet, dass** der Scherenmechanismus zwei Beine (18, 14) umfasst, welche sich an der Stelle eines Drehbolzens (12) kreuzen.

6. Verriegelungsvorrichtung (1) nach Anspruch 5, **dadurch gekennzeichnet, dass** der Drehbolzen (12) gleitend montiert ist.

7. Verriegelungsvorrichtung (1) nach einem der vorhergehenden Ansprüche 5 - 6, **dadurch gekennzeichnet, dass** die Verriegelungsmittel (3) durch freie Enden (17, 18) der Beine (13, 14) der Schere ausgebildet sind.

8. Verriegelungsvorrichtung (1) nach Anspruch 7, **dadurch gekennzeichnet, dass** die Verriegelungsmittel (3) auf den freien Enden (17, 18) der Beine (13, 14) der Schere pro Ende zwei Klemmoberflächen (19, 20), welche im Wesentlichen einen rechten Winkel zueinander für ein Zusammenwirken mit einer inneren Oberfläche (21) einer Öffnung (4) in der Wand (5) der Eckbefestigung (2) bzw. mit einer inneren Oberfläche (22) der Wand (5), welche die Öffnung (4) der Eckbefestigung (2) umgibt, ausbilden.

9. Verriegelungsvorrichtung (1) nach einem der Ansprüche 5 - 8, **dadurch gekennzeichnet, dass** die Beinabschnitte (13a, 14a) der Schere, welche sich zwischen dem Drehbolzen (12) und den freien Enden (17, 18), die mit den Klemmoberflächen (19, 20) versehen sind, erstrecken, länger als die Beinabschnitte (18b, 14b), welche sich zwischen dem Drehbolzen (12) und den gegenüberliegenden freien Enden (23, 24) erstrecken, sind.

10. Verriegelungsvorrichtung (1) nach einem der vorhergehenden Ansprüche 5 - 9, **dadurch gekennzeichnet, dass** die Betriebsmittel (7) mit einer ersten Kontaktoberfläche (25) für ein Zusammenwirken mit einer äußeren Oberfläche (8) der Wand (5) des Eckbeschlags (2) und mit einer zweiten Kontaktoberfläche (27), welche sich mit dem Drehbolzen des Scherenmechanismus in Eingriff befindet, versehen sind.

11. Verriegelungsvorrichtung (1) nach einem der vorhergehenden Ansprüche 5 - 10, **dadurch gekennzeichnet, dass** die Sicherungsmittel (11) einen Stift (28) umfassen, welcher zwischen einer Sicherungsstellung, in welcher der Stift (28) eine Bewegung der Beine (13, 14) der Schere blockiert, und einer freigebenden Stellung, in welcher der Stift (28) eine Bewegung der Beine (13, 14) der Schere freigibt, einstellbar ist.

12. Verriegelungsvorrichtung (1) nach Anspruch 11, **dadurch gekennzeichnet, dass** der Stift (28) unter einer Federwirkung zu der Sicherungsstellung steht.

13. Verriegelungsvorrichtung (1) nach Anspruch 12, **dadurch gekennzeichnet, dass** die Federwirkung mit der Hilfe einer Klammer (32), welche mit einer Anzeige versehen ist, entfernbar ist.

14. Fahrzeug, insbesondere ein Containeruntergestell, welches mit einer Anzahl von Verriegelungsvorrichtungen (1) nach einem der vorhergehenden Ansprüche versehen ist.

## Revendications

1. Dispositif de verrouillage (1), pour verrouiller une ferrure d'angle (2) répondant au standard ISO d'un conteneur à marchandises, comprenant :
- des moyens de verrouillage (3), ajustables entre une position ouverte, dans laquelle les moyens de verrouillage (3) peuvent passer librement par une ouverture (4) de la ferrure d'angle (2), et une position fermée, dans laquelle les moyens de verrouillage (3) s'accrochent derrière l'ouverture d'une paroi (5) entourant l'ouverture (4) de la ferrure d'angle (2) ;
- des moyens d'actionnement (7) qui, lors du placement d'un conteneur sur le dispositif de verrouillage (1), sont ajustables par coopération avec une paroi (5) de la ferrure d'angle (2), d'une position initiale non chargée à une position finale, chargée par le poids du conteneur, et
- un mécanisme d'ajustement (9), couplant les moyens de verrouillage (3) et les moyens d'actionnement (7), d'une manière telle que la position initiale des moyens d'actionnement (7) corresponde à la position ouverte des moyens de verrouillage (3), et que la position finale des moyens d'actionnement (7) corresponde à la position fermée des moyens de verrouillage (3), et que, lors du placement d'une ferrure d'angle (2) d'un conteneur sur le dispositif de verrouillage (1), la charge, due au poids, du conteneur actionne les moyens de verrouillage (3) vers la position fermée, **caractérisé en ce que**, en outre, des moyens de fixation (11) sont prévus pour assurer la fixation les moyens de verrouillage (3) dans la position fermée, et **en ce que** le mécanisme d'ajustement (9) comprend un mécanisme à ciseaux.

2. Dispositif de verrouillage (1) selon la revendication 1, dans lequel, lors du placement d'un conteneur sur les moyens de verrouillage (1), les moyens d'actionnement (7) sont ajustables, par coopération avec une paroi (5) de la ferrure d'angle (2), entre une position initiale non chargée et la position finale, chargée par le poids du conteneur.

3. Dispositif de verrouillage (1) selon la revendication 2, comprenant en outre :
- des moyens de sollicitation (6), sollicitant les moyens de verrouillage (3) vers la position ouverte, de manière que, lors du placement d'une ferrure d'angle (2) d'un conteneur sur le dispositif de verrouillage (1), la charge, due au poids, du conteneur actionne les moyens de verrouillage (3) à l'encontre de l'action de la sollicitation vers la position fermée, et que, lors de l'enlèvement du conteneur vis-à-vis du dispositif de verrouillage, les moyens de sollicitation (6) sollicitent les moyens de verrouillage (3) vers la position ouverte.

4. Dispositif de verrouillage (1) selon la revendication 3, dans lequel les moyens de sollicitation (6) comprennent un accumulateur pour stocker une partie de l'énergie fournie par le conteneur durant le placement sur les moyens d'actionnement (7), et pour délivrer de nouveau l'énergie, via la force de sollicitation, aux moyens d'actionnement (7), durant l'enlèvement du conteneur.

5. Dispositif de verrouillage (1) selon la revendication 4, dans lequel le mécanisme à ciseaux comprend deux branches (13, 14) se croisant à l'emplacement d'un pivot (12).

6. Dispositif de verrouillage (1) selon la revendication 5, dans lequel le pivot (12) est monté à coulissement.

7. Dispositif de verrouillage (1) selon l'une quelconque des revendications 5 à 6, dans lequel les moyens de verrouillage (3) sont formés par les extrémités (17, 18) libres des branches (13, 14) des ciseaux.

8. Dispositif de verrouillage (1) selon la revendication 7, dans lequel les moyens de verrouillage (3), sur les extrémités libres (17, 18) des branches (13, 14) des ciseaux, par extrémité, forment deux surfaces de serrage (19, 20) orientées sensiblement à angle droit l'une par rapport à l'autre, pour coopérer avec une surface intérieure (21) d'une ouverture (4) ménagée dans la paroi (5) de la ferrure d'angle (2), et une surface intérieure (22) de la paroi (5), entourant l'ouverture (4) de la ferrure d'angle (2), respectivement.

9. Dispositif de verrouillage (1) selon l'une quelconque des revendications 5 à 8, dans lequel les parties branche (13a, 14a) des ciseaux s'étendant entre le pivot (12) et les extrémités libres (17, 18) munies des surfaces de serrage (19, 20) sont plus longues que les parties branches (13b, 14b) s'étendant entre le pivot (12) et les extrémités libres (23, 24) opposées.

10. Dispositif de verrouillage (1) selon l'une quelconque des revendications 5 à 9, dans lequel les moyens d'actionnement (7) sont munis d'une première surface de contact (25) devant coopérer avec une surface extérieure (8) de la paroi (5) de la ferrure d'angle (2), et d'une deuxième surface de contact (27) venant en prise avec le pivot du mécanisme à ciseaux.

11. Dispositif de verrouillage (1) selon l'une quelconque des revendications 5 à 10, dans lequel les moyens de fixation (11) comprennent une tige (28), ajustable entre une position de fixation, dans laquelle la tige (28) bloque le déplacement des branches (13, 14) des ciseaux, et une position de libération, dans laquelle la tige (28) libère le déplacement des branches (13, 14) des ciseaux.

12. Dispositif de verrouillage (1) selon la revendication 11, dans lequel la tige (28) est placée sous une action élastique, vers la position de fixation.

13. Dispositif de verrouillage (1) selon la revendication 12, dans lequel l'action élastique peut être supprimée à l'aide d'un crampon (32) muni d'un indicateur.

14. Véhicule, en particulier châssis de conteneur, muni d'une pluralité de dispositifs de verrouillage (1) selon l'une quelconque des revendications précédentes.
